**Europäisches Patentamt**

**European Patent Office**

**Office européen des brevets**

(19)

(11) Numéro de publication: **0 213 009**
**B1**

(12)

# FASCICULE DE BREVET EUROPEEN

(45) Date de publication du fascicule du brevet:
**22.03.89**

(51) Int. Cl.⁴: **F 16 D 13/71**

(21) Numéro de dépôt: **86401566.4**

(22) Date de dépôt: **15.07.86**

(54) Mécanisme d'embrayage à diaphragme, notamment pour véhicule automobile.

(30) Priorité: **29.07.85 FR 8511539**

(43) Date de publication de la demande:
**04.03.87 Bulletin 87/10**

(45) Mention de la délivrance du brevet:
**22.03.89 Bulletin 89/12**

(84) Etats contractants désignés:
**DE GB IT**

(56) Documents cités:
**DE-A- 2 843 317**
**FR-A- 2 342 428**
**FR-A- 2 459 904**
**FR-A- 2 473 140**

(73) Titulaire: **VALEO, 64 Avenue de la Grande Armée,**
**F-75017 Paris (FR)**

(72) Inventeur: **Naudin, Jacky, 4, rue Charles Linne,**
**F-92600 Asnieres (FR)**

(74) Mandataire: **Gamonal, Didier, Société VALEO Service**
**Propriété Industrielle 21, rue Blanqui, F-93406 Saint**
**Ouen (FR)**

## Description

La présente invention concerne d'une manière générale les mécanismes d'embrayage à diaphragme, notamment pour véhicule automobile, du genre comportant une première pièce globalement annulaire, dite couvercle, au moins un plateau, dit plateau de pression, destiné à être solidarisé en rotation avec le couvercle en étant mobile par rapport à celui-ci, une deuxième pièce globalement annulaire, dite diaphragme, comportant une partie périphérique formant rondelle Belleville, pour action sur le plateau de pression, et une partie centrale fragmentée en doigts radiaux, pour action d'une butée de débrayage, et des moyens d'assemblage assujettissant de manière pivotante le diaphragme au couvercle en appliquant axialement ledit diaphragme, avec une charge de serrage élastique, constamment contre un appui primaire porté par le couvercle, lesdits moyens d'assemblage comportant, d'une part, des organes de retenue attelés au couvercle ayant une partie axiale traversant le diaphragme à la faveur de passages ménagés entre les doigts radiaux de celui-ci et une aile d'extrémité, pliée à la faveur d'une saignée que présente la partie axiale, définissant avec ladite partie axiale un coude de calage et, d'autre part, une couronne calée dans ledit coude de calage et adaptée à ménager pour le diaphragme un appui secondaire disposé sensiblement en regard de l'appui primaire.

Un tel mécanisme d'embrayage est adapté à être rapporté par son couvercle sur un plateau, dit plateau de réaction, solidaire d'un premier arbre, en général un arbre menant, avec insertion entre le plateau de réaction et le plateau de pression d'un disque de friction solidaire en rotation d'un deuxième arbre, en général un arbre mené, tandis que, autour de celui-ci, est disposé une pièce, dite butée de débrayage, apte à agir sur les doigts radiaux du diaphragme, pour commande en dégagement de l'embrayage ainsi formé, qui est normalement engagé; le plateau de pression dans une telle position serrant le disque de friction contre le plateau de réaction sous la sollicitation de la partie périphérique formant rondelle Belleville du diaphragme s'appuyant sur l'appui primaire.

Un tel mécanisme d'embrayage est décrit dans la demande de brevet français 7 605 485 du 27 février 1976 (FR-A-2 342 428) et comporte d'une part des organes de retenue, relativement minces et plats, et, d'autre part une couronne, qui est centrée sur la partie axiale desdits organes de retenue par la tranche de sa périphérie interne possédant une portion d'orientation radiale sensiblement plate au contact du code de calage. En outre ladite couronne présente à sa périphérie externe une partie en V très ouvert pour la formation de l'appui secondaire et pour raidissement de ladite couronne. Ainsi cette couronne a une forme tortueuse avec en coupe une portion radiale, une portion inclinée et une autre portion inclinée en sens inverse de la précédente.

Un tel dispositif a donné et donne encore satisfaction.

Ce dispositif présente néanmoins l'inconvénient d'avoir une couronne de relative forte raideur et d'appliquer à ladite couronne, pour un maintien constant du diaphragme sur l'appui primaire, une importante précontrainte qui augmente d'autant plus l'effet d'hystérésis du diaphragme lors de son basculement entre les appuis primaires et secondaires et entraîne au fur et à mesure de l'usure inévitable en service du diaphragme et des appuis, entre lesquels il est monté basculant, de grandes variations de charge.

Pour remédier à ces inconvénients on peut songer à remplacer cette couronne par une couronne en acier à ressort plus mince, telle que décrite dans la demande de brevet allemand 2 843 317 du 4 octobre 1978, mais une telle solution est onéreuse et la couronne n'est pas toute entière située radialement au-delà de la partie axiale des organes de retenue, ce qui complique le montage.

La présente invention a, d'une manière générale, pour objet de pallier ces inconvénients et donc de créer un dispositif qui permette de diminuer la charge de serrage axial en faisant appel à une solution économique.

Suivant l'invention ce mécanisme d'embrayage à diaphragme du type sus indiqué est caractérisé en ce que la couronne est de forme tronconique avec une arête externe arrondie formant appui secondaire et des arêtes internes au contact respectivement de la partie axiale et de l'aîle d'extrémité de l'un au moins des organes de retenue.

Ainsi, allant à l'encontre des idées reçues selon lesquelles la périphérie interne de la couronne d'orientation radiale était nécessaire non seulement pour un bon centrage de ladite couronne mais aussi pour contre-carrer une action d'ouverture de celle-ci lors du pliage de l'aile d'extrémité, en combinaison avec le raidissement de la périphérie externe de ladite couronne par la partie en V, la présente invention permet d'obtenir une couronne de fabrication simplifiée et donc de coût moindre, tout en ayant une bonne précision de serrage grâce notamment à la saignée des organes de retenue et à une réduction des tolérances de fabrication de ladite couronne.

Suivant une autre caractéristique de l'invention la tranche interne de la couronne est arrondie.

Grâce à cette disposition la tranche interne arrondie de la couronne peut glisser axialement le long de la partie axiale des organes de retenue lors de l'opération de pliage de l'aîle d'extrémité sans risque d'incrustation.

Suivant une autre caractéristique le mécanisme d'embrayage est caractérisé en ce que la saignée a en section un profil en trapèze, ladite saignée présentant un fond plat entre deux flancs latéraux inclinés.

Cette disposition est particulièrement avantageuse en combination avec la couronne jonc selon la présente invention, car elle permet un pliage de l'aîle d'extrémité supérieur à 90° et formation d'un coude de calage ayant en coupe axiale un angle aigu. Une possibilité supplémentaire de déformation de la couronne jonc est ainsi offerte, ce qui permet d'obtenir, par modification de l'angle du tronc de cône de celle-ci, une meilleure précision dans la valeur de serrage du diaphragme entre ses appuis primaires et secondaires.

Les objets de la présente invention, leurs caractéristiques et leurs avantages ressortiront d'ailleurs de la description qui va suivre, à titre d'exemple, en référence aux dessins schématiques annexés sur lesquels:

la figure 1 est une vue, en coupe axiale, d'un mécanisme d'embrayage suivant l'invention;

la figure 2 est une vue, à plus grande échelle, d'un détail de la figure 1 correspondant à l'encart II de cette figure 1;

la figure 3 est une vue partielle en coupe axiale se rapportant à une organe de retenue avant pliage de son extrémité;

la figure 4 est une vue partielle en coupe axiale d'une variante de la couronne suivant l'invention.

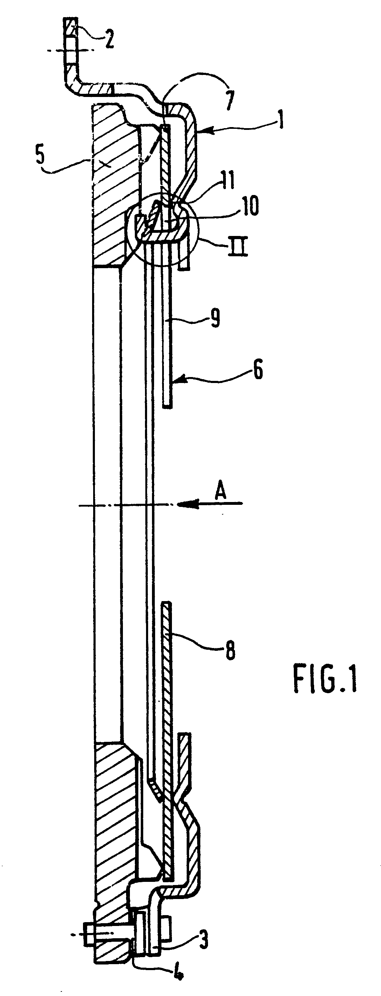

Le ménanisme d'embrayage suivant l'invention comporte, d'une manière générale, tel que visible à la figure 1, une première pièce globalement annulaire 1 dite couvercle, doté à sa périphérie externe d'une première série de plages coplanaires 2 par lesquelles il est susceptible d'être fixé sur un plateau, dit plateau de réaction ou volant (non représenté), et d'une deuxième série de plages coplanaires 3, en retrait par rapport aux précédentes, par lesquelles il est attelé par des languettes 4 à un deuxième plateau 5, dit plateau de pression, une deuxième pièce globalement annulaire 6, dite diaphragme, comportant une partie périphérique 7 formant rondelle Belleville pour action sur le plateau de pression 5 et une partie centrale fragmentée en doigts radiaux 8 séparés, deux par deux, par des fentes 9 issues de passages 10 ménagés entre les doigts 8, dans la zone suivant laquelle ceux-ci se raccordent à la partie périphérique 7 formant rondelle Belleville du diaphragme 6 dont la périphérie externe agit sur le plateau 5.

Les languettes 4 solidarisent en rotation le plateau 5 avec le couvercle 1 tout en permettant audit plateau une mobilité axiale par rapport au couvercle 1.

La deuxième pièce globalement annulaire 6, dite diaphragme, est interposée axialement entre le couvercle 1 et le plateau de pression 5 de façon à permettre à un disque de friction, ici non représenté, intercalé entre le plateau de pression 5 et le plateau de réaction ou volant, d'être serré entre ceux-ci sous la sollicitation dudit diaphragme.

C'est sur l'extrémité radiale des doigts radiaux 8 du diaphragme 6 la plus proche de l'axe du mécanisme qu'est susceptible d'agir une pièce de commande mobile, dite butée de débrayage, dont le sens d'action est schématisé sur la figure 1 par la flèche A.

Des moyens d'assemblage sont prévus pour assujettir de manière pivotante le diaphragme 6 au couvercle 1 avec une charge de serrage élastique maintenant constamment celui-ci contre un appui primaire 11 porté par le couvercle 1 et constitué, dans l'exemple représenté, par un embouti du couvercle 1.

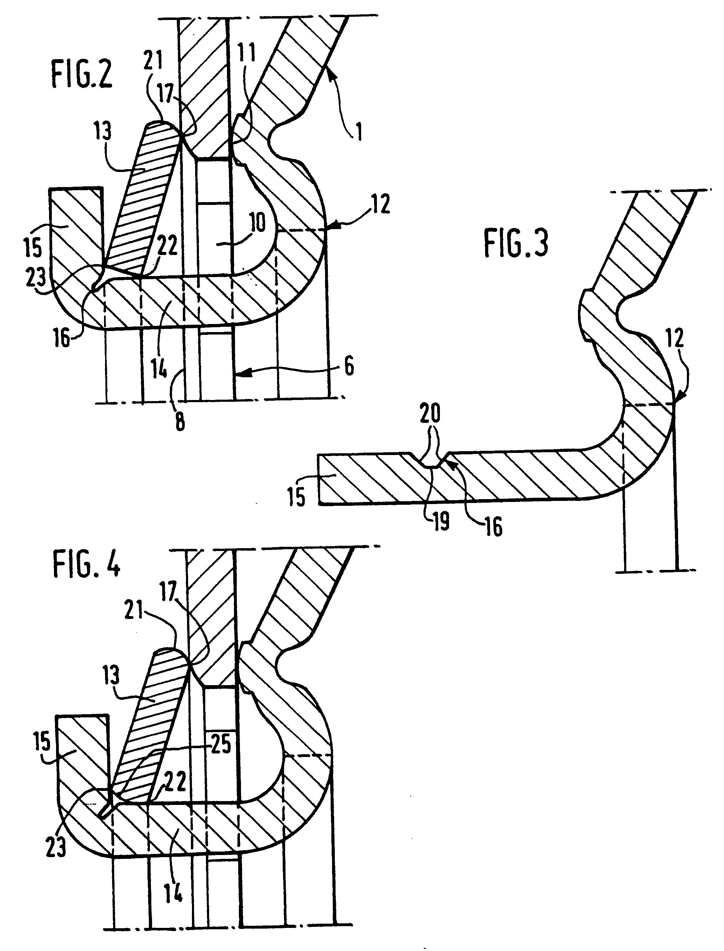

Comme visible sur la figure 2, ces moyens d'assemblage comportent d'une part, des organes de retenue 12, relativement minces et plats, répartis circulairement, attelés au couvercle 1 et d'autre part une couronne 13 calée par ces organes de retenue. Plus particulièrement ces organes comportent une partie axiale 14 traversant le diaphragme 6 à la faveur des passages 10 ménagés dans celui-ci au voisinage de la racine des doigts radiaux 8 et une aile d'extrémité 15, pliée à la faveur d'une saignée 16

que présente la partie axiale 14, définissant un coude de calage avec ladite partie axiale. Ici, ces organes de retenue sont donc minces radialement et allongés circonférentiellement et sont d'un seul tenant avec le couvercle par pliage au niveau de son appui primaire 11.

Dans ce coude est calée la couronne 13 qui s'étend donc radialement toute entière au-delà des parties axiales et qui forme pour le diaphragne 6 un appui secondaire 17, disposé sensiblement en regard de l'appui primaire 11 formé par le couvercle.

En pratique et ainsi que l'illustre la figure 3, avant assemblage d'un tel mécanisme d'embrayage à diaphragme, l'aîle d'extrémité 15 des organes de retenues 12 est droite et parallèle à l'axe de l'ensemble en étant dans l'alignement de la partie axiale 14.

Pour formation de l'aile d'extrémité 15, les organes de retenue 12 sont affectés transversalement sur toute leur largeur d'une saignée 16, ouverte en direction opposée à l'axe de l'ensemble, qui en réduit localement l'épaisseur et qui a, en section, un profil en trapèze présentant un fond plat 19 entre deux flancs latéraux 20, inclinés. De ce fait la ligne de pliage est matérialisée par cette saignée 16. On notera que la profondeur de la saignée est comprise entre 0,15e et 0,30e, e étant l'épaisseur de la patte.

Comme visible à la figure 2, et suivant l'invention, la couronne 13 est de forme tronconique avec, d'une part, une arête externe arrondie 21 formant appui secondaire 17 qui facilite le basculement du diaphragme et qui, lors de sa fabrication, a subi un écrouissage améliorant la résistance à l'usure de l'appui secondaire et, d'autre part, des arêtes internes 22, 23, au contact respectivement de la partie axiale 14 et de l'aile d'extrémité 15 de l'un au moins des organes de retenue 12.

Ainsi après engagement, sur un organe de retenue 12, du diaphragme 6 et de la couronne 13, l'extrémité 15 est repliée radialement au contact de la couronne 13, comme visible à la figure 2, suivant ici un angle droit, et en direction opposée à l'axe de l'ensemble de façon à obtenir le dispositif suivant la figure 2. Si besoin, le pliage peut se faire suivant un angle supérieur ou inférieur à un angle droit, ceci étant rendu possible par la forme de la saignée 16 en trapèze et par coopération de l'aîle 15 et de l'arête 23, l'autre arête 22 glissant sur la partie axiale au cours de cette opération.

A l'issu d'un tel pliage de l'aîle d'extrémité 15, ces organes de retenue 12 appliquent à la couronne 13 une précontrainte qui présente une charge supérieure à celle du diaphragme 6 au niveau de la butée de debrayage A et maintiennent ainsi constamment le diaphragme 6 et plus particulièrement la partie périphérique interne de sa rondelle Belleville contre l'appui primaire 11.

Cette disposition permet le centrage de la couronne 13 grâce à son arête interne 22 ainsi que d'obtenir lors de l'opération de pliage de l'aîle d'extrémité 15, grâce à son arête interne 23, la plus éloignée du diaphragme, une précision de l'effort de serrage de ladite couronne.

Grâce à cela, il n'est pas nécessaire d'utiliser une couronne en acier à ressort, seule suffit une couronne en tôle.

Suivant la variante de la figure 4, la couronne 13 est de forme tronconique avec une arête externe arrondie 21 formant appui secondaire 17 et à sa périphérie interne une tranche arrondie 25, avec des arêtes internes 22, 23, au contact respectivement de la partie axiale 14 et de l'aile d'extrémité 15 de l'un au moins des organes de retenue.

De ce fait, lors de l'opération de pliage de l'aile d'extrémité 15, l'arête interne 22 n'aura pas tendance à s'incruster dans la partie axiale 14 mais au contraire grâce à la tranche arrondie 25 de glisser le long de ladite partie.

Ainsi qu'il ressort à l'évidence de la description, pour un même couvercle, l'épaisseur de la couronne sera fonction de la valeur souhaitée du serrage du diaphragme. En pratique l'épaisseur de la couronne est au moins égale à la moitié de l'épaisseur de la partie axiale 14 des pattes en étant proche de ladite moité.

Bien entendu, l'invention n'est pas limitée aux formes d'exécution décrite et représentée mais embrasse toutes variantes d'exécution. En particulier, l'appui primaire 11 du couvercle 1 peut être formé par un embouti, comme représenté, ou par un jonc ouvert ou fermé emboîté dans une gorge que présente le couvercle.

Il en est de même pour les moyens d'assemblage qui peuvent comporter des organes de retenue issus directement du couvercle et formant avec lui une seule et même pièce, ou des organes de retenue, indépendants les uns des autres, répartis circulairement, qui présentent, outre leurs ailes d'extrémités servant à maintenir la couronne au contact de la rondelle Belleville, une autre aile d'extrémité servant à mettre en appui l'organe de retenue contre le couvercle sur la face de celui-ci opposée à celle qui est en regard du diaphragme, ou des organes de retenue individuels reliés les uns aux autres par une barette commune, qui s'étend circonférentiellement en appui contre le couvercle sur la face de celui-ci opposée à celle qui est en regarde du diaphragme.

En outre on notera que la couronne selon la présente invention se monte sur les couvercles à organes de retenue dotés de saignées de l'Art Antérieur.

Ainsi qu'on l'aura compris la position des saignées et la valeur de l'inclinaison de la couronne sont déterminées pour chaque application de telle sorte qu'aucune interférence n'ait lieu avec le diaphragme lors du fonctionnement de celui-ci.

## Revendications

1. Mécanisme d'embrayage à diaphragme notamment pour véhicule automobile, du genre comportant une première pièce globalement annulaire dite couvercle (1), au moins un plateau dit plateau de pression (5) destiné à être solidarisé en rotation avec le couvercle (1) en étant mobile par rapport à celui-ci, une deuxième pièce globalement annulaire, dite diaphragme (7), comportant une partie périphérique formant rondelle Belleville (7), pour action sur le plateau de pression, et une partie centrale fragmentée en doigts radiaux (8), pour action d'une butée de débrayage, et des moyens d'assemblage assujettissant de manière pivotante le diaphragme (6) au couvercle (1) en appliquant axialement ledit diaphragme (6) avec une charge de serrage élastique constamment contre un appui primaire (11) porté par le couvercle (1), lesdits moyens d'assemblage comportant d'une part, des organes de retenue attelés au couvercle (1) ayant une partie axiale (14) traversant le diaphragme (6) à la faveur de passages (10) ménagés entre les doigts radiaux (8) de celui-ci et une aile d'extrémité (15), pliée à la faveur d'une saignée (16) que présente la partie axiale (14), définissant avec ladite partie axiale un coude de calage, et, d'autre part une couronne (13) calée dans ledit coude et adaptée à ménager pour le diaphragme (6) un appui secondaire (17) disposé sensiblement en regard de l'appui primaire (11), mécanisme d'embrayage caractérisé en ce que la couronne (13) est de forme tronconique avec une arête externe arrondie (21) formant appui secondaire (17) et des arêtes internes (22, 23) au contact respectivement de la partie axiale (14) et de l'aîle d'extrémité (15) de l'un au moins des organes de retenue.

2. Mécanisme d'embrayage selon la revendication 1, caractérisé en ce que le tranche interne (25) de la couronne (13) est arrondie.

3. Mécanisme d'embrayage selon l'une quelconque des revendications 1 et 2, caractérisé en ce que la saignée (16) a en section un profil en trapèze, ladite saignée présentant un fond plat (19) entre deux flancs latéraux inclinés (20).

4. Mécanisme d'embrayage selon la revendication 3, caractérisé en ce que les organes de retenue (12) sont issus directement du couvercle (1) et en ce que l'épaisseur de la couronne (13) est au moins égale à la moitié de l'épaisseur de la partie axiale (14) des organes de retenue (12).

## Patentansprüche

1. Membrankupplungsvorrichtung, insbesondere für Kraftfahrzeug, der Art, die ein erstes, im wesentlichen ringförmiges und als Deckel bezeichnetes Teil (1) enthält, wenigstens eine Platte, die als Druckplatte (5) bezeichnet wird und dazu bestimmt ist, fest mit dem Deckel (1) verbunden zu rotieren und gleichzeitig im Verhältnis zu demselben beweglich zu sein, ein zweites, im wesentlichen ringförmiges Teil, welches als Membran (6) bezeichnet wird und einen Umfangsteil aufweist, der einen Belleville-Dichtungsring (7) bildet, zur Einwirkung auf die Druckplatte, und einen in radiale Zapfen (8) unterteilten Mittelteil zur Betätigung eines Kupplungsausrücklagers, sowie Montageelemente, die die Membran (6) schwenkbar am Deckel (1) festhalten und die erwähnte Membran (6) mit einer elastischen Klemmbelastung ständig gegen ein Primärauflager (11) drücken, welches am Deckel (1) befestigt ist, wobei die erwähnten Montageelemente einerseits Halteorgane aufweisen, welche mit dem Deckel (1) verbunden sind und wobei ein axialer Teil (14) durch die Membran (6) hindurchtritt und Öffnungen (10) bildet, die zwischen den radialen Zapfen (8) derselben und einem Endflügel (15) vorgesehen sind, der zu einem Zapfen (16) gebogen ist, der sich im axialen Teil (14) befindet und mit dem erwähnten axialen Teil einen Verkeilungsbogen bildet, und andererseits einen Kranz (13), der im erwähnten Bogen verkeilt und so ausgebildet ist, daß er für die membran (6) ein sekundäres Auflager (17) darstellt, welches im wesentlichen gegenüber dem primären Auflager (11) angeordnet ist, wobei diese Kupplungsvorrichtung dadurch gekennzeichnet ist, daß der Kranz (13) kegelstumpfförmig ist und eine abgerundete Außenkante (21) aufweist, die ein zweites Auflager (17) bildet, sowie Innenkanten (22, 23), die mit dem axialen Teil (14) bzw. mit dem Endflügel (15) wenigstens eines der Halteorgane in Berührung stehen.

2. Kupplungsvorrichtung gemäß Anspruch 1, dadurch gekennzeichnet, daß der innere Abschnitt (25) des Kranzes (13) abgerundet ist.

3. Kupplungsvorrichtung gemäß einem der Ansprüche 1 und 2, dadurch gekennzeichnet, daß der Zapfen (16) ein trapezförmiges Profil aufweist und zwischen zwei Seitenflanken (20) einen flachen Boden (19) besitzt.

4. Kupplungsvorrichtung gemäß Anspruch 3, dadurch gekennzeichnet, daß die Halteorgane (12) direkt vom Deckel (1) ausgehen und daß die Dicke des Kranzes (13) mindestens gleich der halben Dicke des axialen Teils (14) der Halteorgane (12) ist.

**Claims**

1. A clutch mechanism having a diaphragm, especially for automobile vehicles, of the kind comprising a generally annular first part called a cover (1), at least one plate called a pressure plate (5) adapted to be fixed in rotation with the cover (1) and being movable relative to the latter, a generally annular second part, called a diaphragm (6), comprising a peripheral part forming a Belleville washer (7) to act on the pressure plate, and a central part divided into radial fingers (8) to act on a clutch release bearing, and means of assembling securing the diaphragm (6) to the cover (1) in a pivoting manner by axially applying the said diaphragm (6) with an elastic clamping force continuously against a primary bearing (11) carried by the cover (1), the said assembling means comprising on the one hand retaining elements attached to the cover (1), having an axial part (14) passing through the diaphragm (6) by means of channels (10) made between the radial fingers (8) of the latter, and an end wing (15), folded by means of an incision (16) which the axial part (14) comprises , defining with the said axial part a wedging elbow, and on the other hand a crown (13) wedged in the said elbow and adapted to provide for the diaphragm (6) a secondary bearing (17) disposed substantially facing the primary bearing (11), this clutch mechanism being characterized in that the crown (13) is of frustoconical shape having a rounded external edge (21) forming a secondary bearing (17) and internal edges (22, 23) in contact with the axial part (14) and the end wing (15) respectively of at least one of the retaining elements.

2. A clutch mechanism according to Claim 1, characterized in that the internal edge (25) of the crown (13) is rounded.

3. A clutch mechanism according to any one of Claims 1 and 2, characterized in that the incision (16) has a cross-section in the shape of a trapezium, the said incision presenting a flat bottom (19) between two sloping lateral sides (20).

4. A clutch mechanism acording to Claim 3, characterized in that the retaining elements (12) arise directly from the cover (1) and in that the thickness of the crown (13) is at least equal to half the thickness of the axial part (14) of the retaining elements (12).

FIG.1

FIG.2

FIG.3

FIG. 4